Europäisches Patentamt

European Patent Office

Office européen des brevets

(11) Publication number: **0 154 612**
**B1**

(12) **EUROPEAN PATENT SPECIFICATION**

(45) Date of publication of patent specification: **01.08.90**

(21) Application number: **85830043.7**

(22) Date of filing: **25.02.85**

(51) Int. Cl.⁵: **B 29 D 30/00,** B 65 G 47/90

(54) Apparatus for handling tyres to and from a vulcanizing machine.

(30) Priority: **29.02.84 IT 934984**

(43) Date of publication of application:
**11.09.85 Bulletin 85/37**

(45) Publication of the grant of the patent:
**01.08.90 Bulletin 90/31**

(84) Designated Contracting States:
**DE FR GB SE**

(56) References cited:
**EP-A-0 099 326**
**FR-A-1 554 992**
**FR-A-2 370 574**
**US-A-2 802 586**
**US-A-3 033 387**
**US-A-3 137 032**

(73) Proprietor: **CIMA IMPIANTI S.p.A.**
**Via Gora e Barbatole 192**
**I-51100 Pistoia (IT)**

(72) Inventor: **Capecchi, Floriano**
**Via Mantegna, 14**
**I-5110 Pistoia (IT)**

(74) Representative: **Mannucci, Gianfranco, Dott.-Ing.**
**Ufficio Tecnico Ing. A. Mannucci Via della Scala 4**
**I-50123 Firenze (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to an apparatus for handling tyres to be placed in a vulcanizing machine — particularly for regenerating the tread or the whole tyre — and for the removal from it, comprising: a housing or frame developed along the front of a set of vulcanizing machines and rail guides along which a carriage is movable to reach transfer positions towards and from each of the vulcanizing machines; on said carriage an articulated arm, for handling the tyres, having several degrees of freedom and engaging means to engage the tyre in order to withdraw it from the open mold of a vulcanizing machine or to transfer it from the engaging position into the open mold of a vulcanizing machine.

An apparatus of this type is known from EP-A-0 099 326. This document discloses a tyre supplying apparatus which comprises a carriage running along rails placed on the ground and extending parallel to a front of vulcanizing machines. The carriage, which supplies tyres to all the machines of the front, is equipped with an arm which picks up a tyre from the carriage and places it into the vulcanizing machine after having centered it with a centering device of said arm. The arm of this known apparatus is placed horizontally and can be lowered in order to pick up a tyre from the carriage and then to be lifted up in order to bring said tyre at a height above the aperture of the mold of the vulcanizing machine. With a horizontal displacement of the arm the tyre is subsequently brought into alignment with the mold of the vulcanizing machine. With a subsequent lowering movement of the horizontal arm, the tyre is placed inside the mold. This apparatus has the disadvantage that the movement of the tyre supplying arm requires a large space in front of the vulcanizing machine. Moreover, it can be used only in conjunction with vulcanizing machines having a mold cover which is opened by lifting it vertically in such a way that there is left a large space between mold and cover for the insertion of the tyre supplying arm and for placing the tyre inside the mold. Thus this known apparatus could not be used, for example, with vulcanizing machines having a mold cover which cannot be completely removed from the body of the mold, e.g. vulcanizing machines with covers which are hinged to the body of the machine.

The object of the invention is which overcomes this drawback. This and other objects, which will become apparent to those skilled in the art by reading the following description, are obtained with an apparatus of the abovementioned type, further characterized in that: said articulated arm has two articulated heads, a beam articulated between the two heads, a transmission for kinematically connecting said two heads, and an end arm carrying said engaging means and that there is provided a conveyor formed by said frame, on which the vulcanized tyres are placed by said articulated arm. The articulated arm of the apparatus according to the invention needs very little room for its movements. Moreover, the apparatus according to the invention is able to pick up a tyre to be vulcanized, which is placed in front of the vulcanizing machine, and to place a vulcanized tyre over a conveyor which extends above the vulcanizing machines and which, therefore, does not occupy any working area in front of the vulcanizing machines front.

Further advantageous embodiments of the invention are set out in the dependent claims. In particular, in a possible advantageous embodiment of the invention, the articulated arm has at least four orthogonal and skew articulation axes.

A storing and feeding group can be placed in front of each vulcanizing machine; said group is provided with a reservoir-conveyor for tyres, and has means for presenting succesive tyres in a horizontal position and with means for centering the tyre in the horizontal position.

In a possible embodiment, the storing group comprises: a continuous conveyor with intermittent motion, having seats to carry the tyres in a vertical and transversal position; transmission means to open the seats and permit the tyre to be inclined; an equipment movable around a horizontal and transversal axis, comprising a plate and bracket-like small pillars to receive the tyre in an almost vertical resting position and placing it in a horizontal position; and on said plate, means for centering the tyre. The centering means may comprise articulated teeth for upward — as well as radially outward — displacements, and means for the simultaneous operating of said teeth.

The invention will be better understood by reading the following description reference being made to the enclosed drawing, which shows a practical, non limiting example of the invention. In the drawing:

Fig. 1 shows a plan ensemble view of a portion of a plant;

Fig. 2 shows a partial frontal view, substantially taken on line II—II of Fig. 1;

Fig. 3 shows an end view, substantially taken on line III—III of Fig. 1;

Fig. 4 shows an enlarged and isolated plan view of the storing and feeding group;

Figs. 5 and 6 show a side view from line V—V of Fig. 4, and a section view substantially along the broken line VI—VI of Fig. 4;

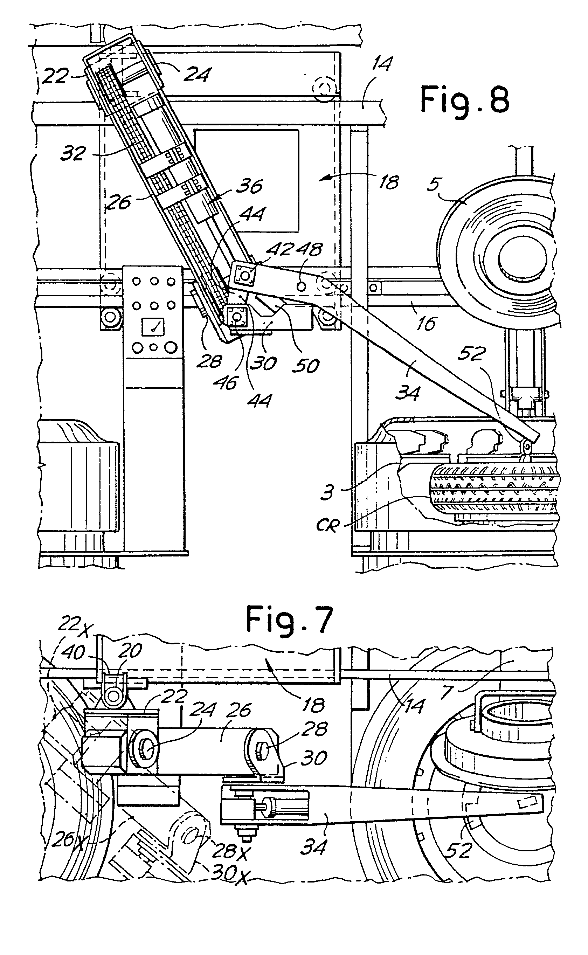

Figs. 7 and 8 show enlarged details of Figs. 1 and 2.

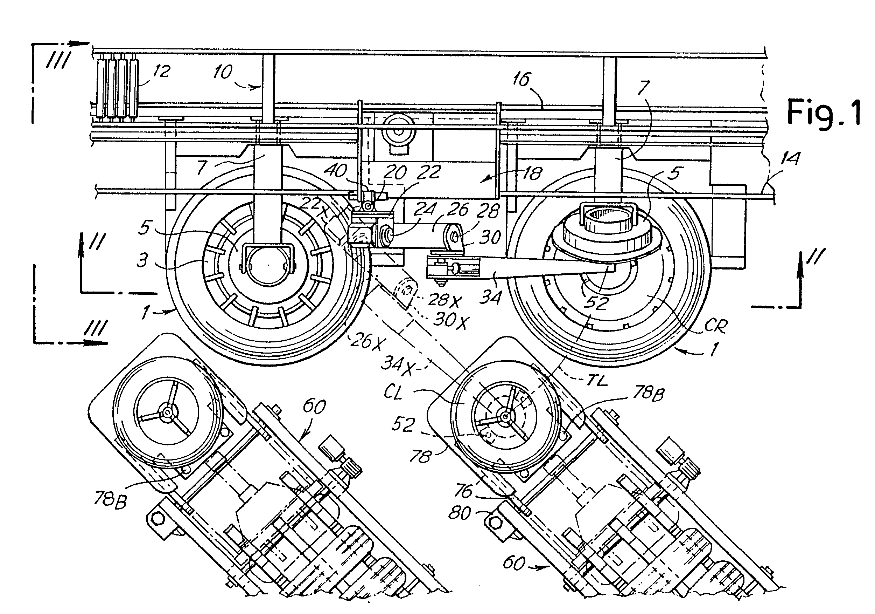

According to what is illustrated in the accompanying drawing and first referring to Figs. 1 to 3, numeral 1 indicates individual vulcanizing machines of traditional type, mostly with molds having sectors 3, with a cover 5 being liftable by an arm 7 and with or without a vertical extractor to lift the tyre. The individual machines 1 are lined-up disposed and uniformly oriented to be served by a pick up and replacement plant capable of alternatively serving the various machines.

To this purpose, a back housing is provided, generally indicated with 10, which makes up — in the upper part — a conveyor 12, usually a roll conveyor, which is only partially shown and is intended for receiving the regenerated tyres to allow for their easy moving away. The housing 10 forms also rail guides 14, 16 for the sliding of a shaped carriage 18 which can thus move backwardly and above the front of the machines 1.

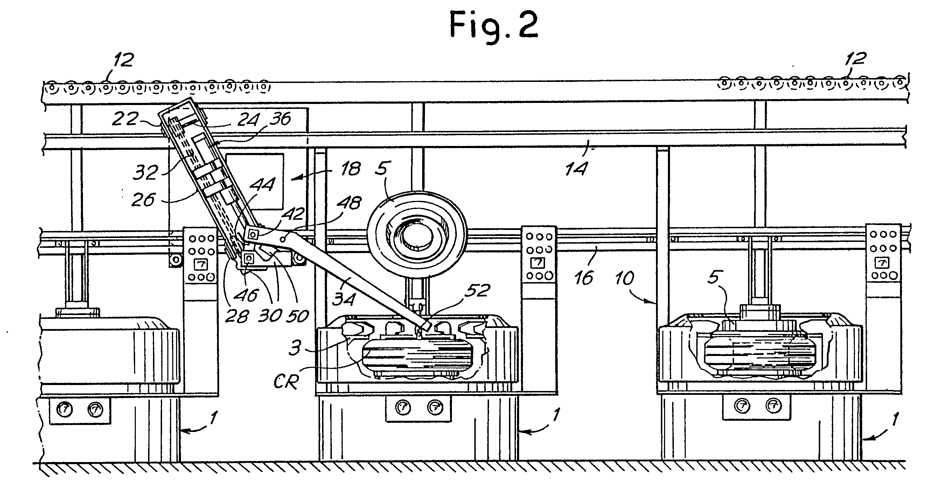

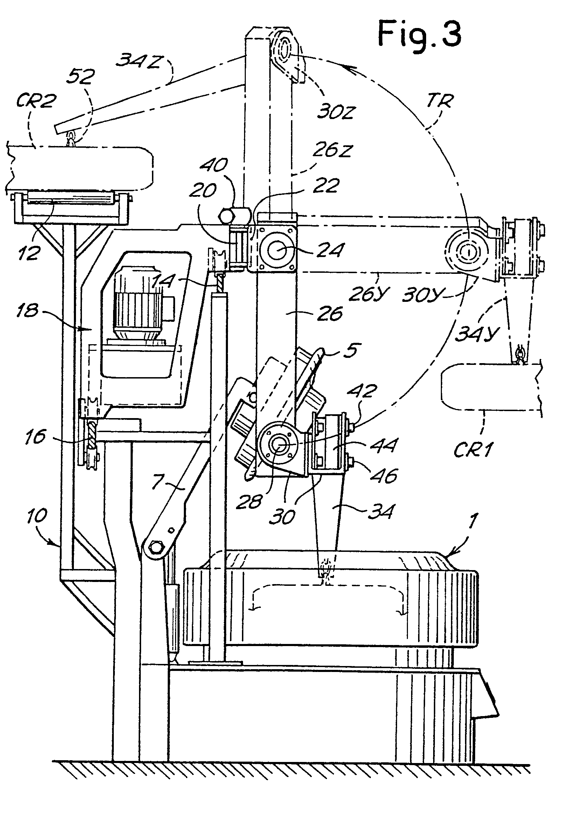

The carriage 18 carries an arm being articulated according to various directions for handling the tyres to be placed in the molds of the vulcanizing machines and to be picked up therefrom and laid down on the conveyor 12. In particular, a head 22 is mounted according to a vertical articulation axis 20, which head can swing — together with all is connected thereto — around said vertical axis in a horizontal plane, for example, between the position shown by a continuous line and the position 22X shown by a dotted line in Fig. 1. The head 22 bears an axis 24 being inclined respect to the horizontal and skew respect to the vertical axis 20; around the inclined axis 24 a beam 26 may rotate, in all the positions that can be reached by head 22; from the position shown by continuous line in Figs. 2 and 3, the beam 26 may reach other positions like the one indicated by 26X. At the mobile end of beam 26, an articulation axis 28 is formed, being advantageously parallel to the articulation axis 24, to articulate a second head 30. Heads 22 and 30 are kinematically connected — for example through a chain system 32 — in order to remain substantially parallel between them during the angular excursions of beam 26; anyway, it is not excluded that some changes may occur in the arrangement of the two heads 22 and 30, connected with the angular excursion of the beam 26. The second head 30 carries an articulated end arm 34 especially shaped to be operated by a cam system to be described below.

In particular, the actuating system of beam 26 may consist of a cylinder-piston system 36, combined with chains 32 for the actuation of the beam through the reaction of the chain wheels carried by axis 24. The head 22 may be operated by a motor system 40 which reacts on the carriage 18. The end arm 24 is articulated at 42 with a connecting rod 44 being articulated at 46 with the head 30; a stylus, summarily illustrated in 48 cooperates with a cam profile (not shown) carried by head 30 in order to obtain a predetermined law of movement of the arm 34 when the articulation 42 is moved with the freedom degree allowed by the connecting rod 44. A cylinder-piston operating system 50 causes, by reacting on head 30, the movements of articulation 42 around the articulation 46 and thus the movements of the end arm 34 according to the law imposed by the above mentioned cam profile.

At the mobile end of the terminal arm 34 a system to pick up a tyre is provided, generally indicated by 52 and capable to engage the bead or rim of the tyre to be handled in a horizontal arrangement for example, and besides, to move a regenerated tyre CR from the open mold, which has vulcanized it, on to the conveyor 12. To perform this function, the carriage 18 is brought, for example, to the position shown in Fig. 1, and the articulated arm made up of the components 20, 22, 24, 26, 28, 30, 34 is lowered to the position shown in Figs. 1 to 3 and is able to pick up the tyre CR since the cover is lifted; the cover begins to be raised in an approximately vertical direction and then is shifted as shown in Fig. 3 to reach, through intermediate positions like the ones indicated by CR1 and according to trajectories TR of the arm components, the position CR2 where it is abandoned by the drawing system 52 on the conveyor 12; the combined trajectories are obtainable by programmed controls of the movements around articulations 24, 28, 46, 42 and by the above mentioned cam profile, and permit to avoid the cover 5 when raised. The articulated arm positions shown with dotted lines 26Y, 30Y, 34Y and 26Z, 30Z, 34Z (Fig. 3) are reached for drawing a retreaded tyre CR, just vulcanized, from its mold and for transferring it on the conveyor 12 for its removal. Immediately after this operation, the program controlling the articulated arm causes the same arm displacement from the position 26Z, 30Z, 34Z (Fig. 3) as far as the lowered and rotated position shown with 22X, 26X, 30X, 34X (Fig. 1), where the drawing system 52 is able to engage a tyre to be worked CL, for its transfer from a position where it is properly presented as far as the open mold of the machine, from which the retreaded tyre CR has been just before drawn in the above mentioned way. The articulated arm is operated by the program to raise the tyre CL, transfer it along the trajectory TL (Fig. 1) and lay it in the mold ready for its reception. It is not excluded that the loading operation of a tyre CL may be carried out not immediately after a retreaded tyre CR has been drawn. After positioning a tyre CL in the open mold, the machine is operated for closing the mold and for the vulcanizing cycle, the articulated arm being moved away in time in order not to interfere with the cover 5 running through its closing trajectory.

The carriage 18 is in time brought again in operative position respect to the various machines 1, whenever a machine has completed its own vulcanizing cycle, with an adequate and possible phase difference respect to the cycles of the other machines.

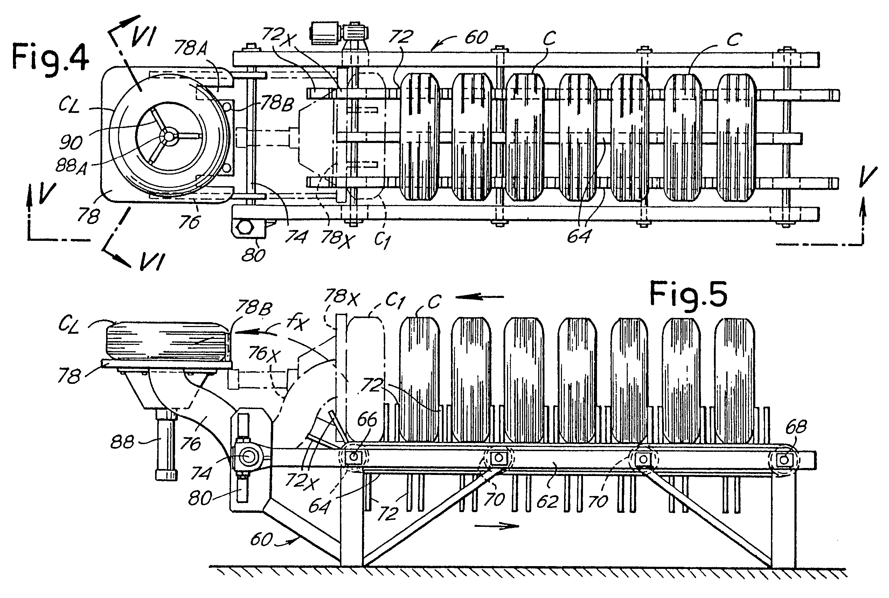

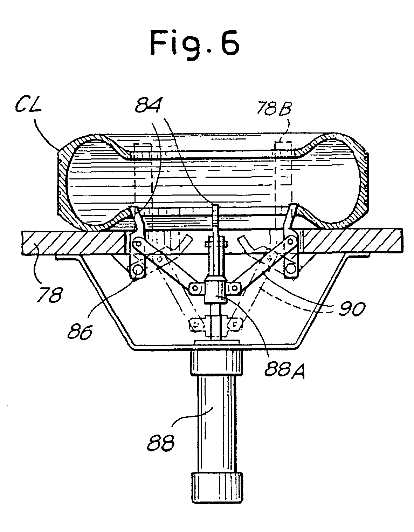

Each machine 1 is associated with a supplying, storing and feeding group partially shown in Fig. 1 and better shown in Figs. 4 to 6. Each storing and feeding group is generally indicated by 60 and comprises a framework 62 supporting a chain conveyor 64 driven around end axes 66 and 68 and also advantageously supported by intermediate guide means, developed as bearing rolls 70 and possible auxiliary rails. The conveyor 64 has seats 72 for tyres C, which are placed on the conveyor 64 in the seats provided along the conveyor upper branch, to make up a storing reservoir for tyres of the same type to be fed to a same machine. Each of the seats 72 is made up of a pair of appendixes singularly combined to the chains of the conveyor 64, thereby, along the driving wheels and, in particular, along the one around the axis 66 reached by the conveyor upper branch, the appendixes progressively and independently tilts as shown in 72X in Figs. 4 and 5; accordingly, a tyre C reaching the position C1 is no longer firmly held by the appendixes forming the seat for the tyre in position C1. At the end of the housing 62, where the transmission axis 66 is located, there is an equipment made up by arms 76 and a plate 78 which is articulated in 74. A drive system 80 can move the equipment 76, 78 around the axis 74, from the position shown by continuous line up to the position 76X, 78X and vice versa. In the position 76X, 78X, said equipment has the plate 78 in such a position as to make contact with the tyre that reaches position C1. Plate 78 presents slots, that is, notches 78A, which permit the passage of the appendixes of seats 72 when they tilt, as indicated by 72X, around the driving wheel on the axis 66. The plate 78 presents also a pair of small pillars 78B, which are located immediately below the tyre in the position C1 when the plate 78 is in the position 78X and the tyre approaches the position C1. Owing to this arrangement, the tyre in the position C1 can be picked up by the equipment 76, 78 when the tyre in position C1 approaches the plate 78X and this is moved according to the arrow fx from the position 76X, 78X up to the position shown by continuous line, with the plate 78 being horizontal. The tyre which has reached the position C1 is thus brought in the horizontal position CL to be picked up and worked.

The tyre in position C1 must be centered so as to have its own axis in an exactly defined position to consent the drawing of same tyre by the articulated arm 22, 26, 30, 34. This occurs automatically, with pillars 78B picking up the plate 78 only when tyres are present having the maximum diameter which has been devised when designing the group 60. When tyres having lower diameter are to be worked, they do not result automatically centered; and, anyway, it is always advisable to provide for an accurate centering of the tyre in the position CL on the horizontal plate 78. To this purpose, a centering device is provided, as can be better seen in Figs. 4 and 6, which acts on the lower rim or bead of the tyre in position CL. This device comprises a set of centering fingers 84 being articulated at 86 below the plate 78 suitably centrally open; fingers 84 — from a position (shown in dotted line in Fig. 6) where they are lowered and brought near the centre of plate 78 — may be lifted and radially displaced in centrifugal direction by a sole and underlying cylinder -piston driving system 88, whose movable head 88A drives the single fingers 84 through small connecting rods 90. In this way, a tyre in position CL, but not centered, is automatically centered by the fingers 84 which have been raised and spread apart simultaneously and symmetrically; this is possible for a certain range of diameters of the inner rim belonging to tyres of different type.

In any case, a tyre from the storage built up by the conveyor of group 60, may be accurately positioned in a horizontal arrangement, as shown in CL, to be drawn, as above mentioned, by the articulated arm, as previously indicated.

## Claims

1. Apparatus for handling tyres to be placed in a vulcanizing machine (1) — particularly for regenerating the tread or the whole tyre — and for the removal from it, comprising a housing or frame (10) developed along the front of a set of vulcanizing machines (1) and rail guides (14, 16) along which a carriage (18) is movable to reach transfer positions towards and from each of the vulcanizing machines (1); on said carriage an articulated arm, for handling the tyres, having several degrees of freedom and engaging means (52) to engage the tyre in order to withdraw it from the open mold (3, 5) of a vulcanizing machine (1) or to transfer it from the engaging position into the open mold of a vulcanizing machine, characterized in that: said articulated arm has two articulated heads (22, 30), a beam (26) articulated between the two heads (22, 30), a transmission (32) for kinematically connecting said two heads (22, 30), and an end arm (34) carrying said engaging means (52) and that there is provided a conveyor (12) formed by said frame (10), on which the vulcanized tyres are placed by said articulated arm.

2. Apparatus according to claim 1, characterized in that the articulated arm has at least four orthogonal and skew articulation axes (20, 24, 28, 46).

3. Apparatus according to claim 1 or 2, characterized by a storing and feeding group (60) associated with each vulcanizing machine (1), provided with a reservoir-conveyor (64) for tyres (C), with means (74, 76, 78, 80) for presenting successive tyres (C) in a horizontal position (CL) and with means (84, 86, 88) for centering the tyre in the horizontal position.

4. Apparatus according to any of the preceding claims, characterized in that the storing group (60) comprises: a continuous conveyor (64) with intermittent motion, having seats (72) to carry the tyres in a vertical and transversal position; transmission means (66, 68) to open the seats and permit the tyre to be inclined; an equipment (76, 78) movable around a horizontal and transversal axis (74), comprising a plate (78) and bracket-like small pillars (78B) to receive the tyre (C1) in an almost vertical resting position and to place it in a horizontal position and on said plate (78) means (84, 86, 88) for centering the tyre.

5. Apparatus according to claim 4, characterized in that the centering means comprise articulated teeth (84) for upward — as well as radially outward — displacements and means (88, 88A, 90) for the simultaneous operating of said teeth (84).

## Patentansprüche

1. Beladungsvorrichtung für Reifen, die in einer Vulkanisiereinrichtung (1) angeordnet werden sollen — insbesondere zum Erneuern der Lauffläche oder des gesamten Reifens — und zum Entladen aus derselben, mit einem Gehäuse oder Rahmen (10), das/der entlang der Vorderseite eines Satzes von Vulkanisiereinrichtungen (1) ausgebildet ist, und Schienenführungen (14, 16), entlang denen ein Wagen (18) bewegbar ist, um Übertragungspositionen auf jede und von jeder der Vulkanisiereinrichtungen zu erreichen; wobei auf dem Wagen ein Gelenkausleger zur Handhabung der Reifen mehrere Freiheitsgrade und ein Eingriffselement (52), um an den Reifen anzugreifen, um diesen aus der offenen Form (3, 5) einer Vulkanisiereinrichtung (1) herauszuziehen oder diesen aus der Eingriffsposition in die offene Form einer Vulkanisiereinrichtung zu übertragen, aufweist, dadurch gekennzeichnet, daß der Gelenkausleger zwei Gelenkköpfe (22, 30), einen zwischen den zwei Gelenkköpfen (22, 30) angelenkten Träger (26), ein Triebwerk (32) zum kinematischen Verbinden der zwei Köpfe (22, 30), und einen Endausleger (34), der das Eingriffselement (52) trägt, aufweist, und daß eine durch den Rahmen (10) ausgebildete Fördereinrichtung (12) vorgesehen ist, auf der die vulkanisierten Reifen durch den Gelenkausleger abgelegt werden.

2. Vorrichtung nach Anspruch 1, dadurch gekennzeichnet, daß der Gelenkausleger zumindest vier orthogonale und schiefwinklige Gelenkachsen (20, 24, 28, 46) aufweist.

3. Vorrichtung nach Anspruch 1 oder 2, gekennzeichnet durch eine mit jeder Vulkanisiereinrichtung (1) verbundene Speicher- und Zuführgruppe (60), die mit einer Vorratsfördereinrichtung (64) für Reifen (C) versehen ist, mit Elementen (74, 76, 78, 80), um aufeinanderfolgende Reifen (C) in eine horizontale Position (CL) zu bringen und mit Elementen (84, 86, 88) zum Zentrieren des Reifens in der horizontalen Position.

4. Vorrichtung nach einem der vorstehenden Ansprüche, dadurch gekennzeichnet, daß die Speichergruppe (60) umfaßt: Eine kontinuierliche Fördereinrichtung (64) mit unterbrechender Bewegung, die Sitze (72) aufweist, um die Reifen in einer vertikalen und transversalen Position zu tragen; eine Übertragungseinrichtung (66, 68), um die Sitze zu öffnen und zu erlauben, daß der Reifen sich neigt; eine Vorrichtung (76, 78), die um eine horizontale und transversale Achse (74) bewegbar ist, mit einer Platte (78) und klammerartigen kleinen Stützen (78B), um den Reifen (C1) in einer fast vertikalen Ruheposition aufzunehmen und diesen in einer horizontalen Position anzuordnen, und auf der Platte (78) mit Elementen (84, 86, 88) zum Zentrieren des Reifens.

5. Vorrichtung nach Anspruch 4, dadurch gekennzeichnet, daß die Zentrierelemente angelenkte Zähne (84) für nach oben gerichtete — genauso wie radial nach außen gerichtete — Verstellungen, und Elemente (88, 88A, 90) zum gleichzeitigen Betätigen der Zähne (84), umfaßt.

**Revendications**

1. Dispositif pour manipuler des pneus devant être positionnés dans une machine de vulcanisation (1) — en particulier pour régénérer la bande de roulement ou le pneu tout entier — et pour les retirer de celle-ci, comprenant un châssis ou bâti (10) s'étendant le long de la partie frontale d'un groupe de machines de vulcanisation (1) et des rails de guidage (14, 16) sur lesquels un chariot (18) se déplace pour atteindre des positions de transfert vers et en provenance de chacune des machines de vulcanisation (1), sur ledit chariot étant prévu un bras articulé, pour manipuler les pneus, possédant plusieurs degrés de liberté et des moyens de prise (52) pour prendre le pneu de manière à le retirer du moule ouvert (3, 5) d'une machine de vulcanisation (1) ou à le transférer de la position de prise dans le moule ouvert d'une machine de vulcanisation, caractérisé en ce que: ledit bras articulé comporte deux têtes (22, 30) articulées, une poutre (26) articulée entre les deux têtes (22, 30), une transmission (32) pour coupler cinématiquement lesdites deux têtes (22, 30) et un bras d'éxtrémité (34) supportant lesdits moyens de prise (52), et en ce qu'il est prévu un transporteur (12) formé par ledit châssis (10), sur lequel les pneus sont placés par ledit bras articulé.

2. Dispositif suivant la revendication 1, caractérisé en ce que le bras articulé présente au moins quatre axes d'articulation orthogonaux et gauches (20, 24, 28, 46).

3. Dispositif suivant la revendication 1 ou 2, caractérisé en ce qu'il comprend un groupe d'alimentation et de stockage (60) associé à chaque machine de vulcanisation (1), pourvu d'un transporteur-réservoir (64) pour pneus (C), de moyens (74, 76, 78, 80) pour présenter les pneus successifs (C) dans une position horizontale (CL) et de moyens (84, 86, 88) pour centrer le pneu dans la position horizontale.

4. Dispositif suivant l'une quelconque des revendications précédentes, caractérisé en ce que le groupe de stockage (60) comprend: un transporteur continu (64) avec mouvement intermittent, comportant des logements (72) pour supporter les pneus dans une position verticale et transversale; des moyens de transmission (66, 68) pour ouvrir les logements et permettre au pneu de s'incliner; un dispositif (76, 78) mobile autour d'un axe horizontal et transversal (74), comprenant une plaque (78) et des petites colonnes servant de support (78B) pour recevoir le pneu (C1) dans une position de support sensiblement verticale et pour le placer dans une position horizontale et, sur ladite plaque (78), des moyens (84, 86, 88) pour le centrage du pneu.

5. Dispositif suivant la revendication 4, caractérisé en ce que les moyens de centrage comprennent des dents articulées (84) pour des déplacements vers le haut — et également vers l'extérieur — et des moyens (88, 88A, 90) pour la commande simultanée desdites dents (84).

Fig.1

EP 0 154 612 B1

# Fig. 2

EP 0 154 612 B1

Fig.3

Fig.4

Fig.5

4

# Fig. 6

Fig.8

Fig.7